(19) Europäisches Patentamt
European Patent Office
Office européen des brevets

(11) **EP 4 703 836 A1**

(12) **EUROPEAN PATENT APPLICATION**

(43) Date of publication:
**04.03.2026 Bulletin 2026/10**

(21) Application number: **24197423.7**

(22) Date of filing: **29.08.2024**

(51) International Patent Classification (IPC):
**G05D 1/606** (2024.01)   **G05D 1/661** (2024.01)
**G05D 1/43** (2024.01)   **G05D 109/30** (2024.01)
**G05D 107/80** (2024.01)   **G05D 101/10** (2024.01)
**G05D 105/22** (2024.01)   **B63H 25/00** (2006.01)

(52) Cooperative Patent Classification (CPC):
**G05D 1/43; B63B 79/20; B63H 25/42; G05D 1/606;**
**G05D 1/661;** G05D 2101/10; G05D 2105/22;
G05D 2107/84; G05D 2109/34

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **CPAC Systems AB**
**401 23 Göteborg (SE)**

(72) Inventor: **LUND, Erik**
**431 31 Mölndal (SE)**

(74) Representative: **Zacco Sweden AB**
**P.O. Box 5581**
**Löjtnantsgatan 21**
**114 85 Stockholm (SE)**

(54) **SYSTEM AND METHOD FOR STEERING CONTROL STABILIZATION OF A MARINE VESSEL**

(57)    A system and a method therein for steering control stabilization of a marine vessel is provided.
The system comprises a steering control device, a control unit and a model simulation device.
The steering control device provides control signals in response to manual control inputs from an operator of the marine vessel to the model simulation device.
The model simulation device applies the control signals to a simulated model of a marine vessel and provide a resulting position and bearing, and their respective rate of change, of the simulated model of the marine vessel to the control unit.
The control unit controls a propulsion system of the marine vessel based on a difference between a real-time current position and bearing, and their respective rate of change, of the marine vessel and the resulting position and bearing, and their respective rate of change, of the simulated model of the marine vessel.

FIG. 2

## Description

**TECHNICAL FIELD**

The disclosure relates generally to steering control of a marine vessel. In particular aspects, the disclosure relates to a system and a method for steering control stabilization of a marine vessel. According to further aspects, the disclosure also relates to a computer program product and a computer readable storage medium, as well as, a marine vessel comprising the system.

**BACKGROUND**

In modern marine vessels, it is common to have some form of automated docking assistance system in order to assist an operator of the marine vessel when docking the marine vessel. These type of automated docking assistance system are commonly referred to as Assisted Docking, AD, or Dynamic Positioning System, DPS. When activated, these automated docking assistance systems normally operate and control the drive system of the marine vessel with the goal of keeping the marine vessel fixed at a certain location, this while allowing the operator of the marine vessel to indicate via steering controls, such as, e.g. a joystick control, a direction in which the marine vessel is to be propelled. In this way, the marine vessel is both controlled by the automated docking assistance system and the operator of the marine vessel.

In some cases, the automated docking assistance system may be arranged to activate/de-active itself based on the movement of the steering controls, e.g. when a joystick control is moved in a combination of two or more axis-directions. This may, for example, be performed by an operator of the marine vessel in order to compensate for current wind conditions or misalignment with the dock. Unfortunately, this may result in that once the automated docking assistance system activates itself again, it may be unaware of the current wind conditions and thus it may take a while before it starts to compensate for the new position. This delay may cause the operator of the marine vessel to again move the joystick to compensate before the automated docking assistance system does. This can result in an undesired "tug-of-war" between the automated docking assistance system and the operator of the marine vessel.

Furthermore, in some cases, movement of the joystick in a one-axis direction by the operator of the marine vessel may be proportional to a velocity. This may cause the automated docking assistance system to attempt to reach this velocity as fast as possible, which may cause a quite aggressive acceleration. This in turn may cause the operator of the marine vessel to move the joystick back in the opposite direction, which cause a braking of the marine vessel. In response to the braking, the operator of the marine vessel may move the joystick again in the first direction. This oscillation of compensating movements caused by the interaction between the automated docking assistance system and the operator of the marine vessel is also not particularly desired.

Hence, there is a need to improve the steering control of marine vessels.

**SUMMARY**

According to a first aspect of examples herein, a system for steering control stabilization of a marine vessel is provided. The system comprising a steering control device, a control unit and a model simulation device. The steering control device is arranged to provide control signals in response to manual control inputs from an operator of the marine vessel to the model simulation device. The model simulation device is arranged to apply the control signals generated by the steering control device to a simulated model of a marine vessel and provide a resulting position and bearing, and their respective rate of change, of the simulated model of the marine vessel to the control unit. The control unit is arranged to control a propulsion system of the marine vessel based on a difference between a real-time current position and bearing, and their respective rate of change, of the marine vessel and the resulting position and bearing, and their respective rate of change, of the simulated model of the marine vessel provided by the model simulation device.

The first aspect of the disclosure may seek to improve the steering control of marine vessels. A technical benefit may include an increased operator-friendliness of the steering controls and that the operator of the marine vessel will experience a smoother and more stable behaviour of the marine vessel when controlling the marine vessel during docking.

Optionally in some examples, including in at least one preferred example, the model simulation device may be arranged to apply the real-time current position and bearing, and their respective rate of change, of the marine vessel as input when applying subsequent control signals to the simulated model of the marine vessel. Here, a technical benefit may include that the simulated model of the marine vessel will be continuously fed with and able to consider the real-time current position and bearing, and their respective rate of change, of the marine vessel. This ensures that the actual position and bearing, and their respective rate of change, of the marine vessel is synchronized with the position and bearing, and their respective rate of change, of the simulated model of the marine vessel.

Optionally in some examples, including in at least one preferred example, the model simulation device may be arranged to apply the resulting position and bearing, and their respective rate of change, of the simulated model of the marine vessel as input when applying subsequent control signals to the simulated model of the marine vessel. Here, a technical benefit may include that the resulting position and bearing, and their respective rate of change, of the simulated model of the marine vessel may be correlated with the actual position and bearing, and their respective rate of change, of the marine vessel, and thus be used to confirm model accuracy.

Optionally in some examples, including in at least one preferred example, the model simulation device may be arranged to simulate ideal operating conditions for the simulated model of the marine vessel when applying the control signals to the simulated model of the marine vessel. Here, a technical benefit may include that the simulated model of the marine vessel may be simulated without e.g. any wind, waves or sea drift, affecting the simulated model of the marine vessel, the actual marine vessel may be made to act in a manner as it would in case there was no disturbances, i.e. as if there was no wind, waves or current. Here, optionally in some examples, including in at least one preferred example, the method comprises the simulated ideal operating conditions for the marine vessel comprise that the marine vessel is simulated as not subjected to any wind, waves or sea drift.

Optionally in some examples, including in at least one preferred example, in case no control signals is provided to the model simulation device, the model simulation device may be arranged to simulate the model of a marine vessel assuming that the rate of changes of the position and bearing for the simulated model of the marine vessel is null. Here, a technical benefit may include that the simulated model of the marine vessel is not being effected by the current measurements of the marine vessel when the velocity of the marine vessel is close to or equal to zero, i.e. the measured position, bearing and their rate of change is not used at input to the simulated model of the marine vessel which instead use its previous position, bearing and rate of changes.

Optionally in some examples, including in at least one preferred example, the control unit may be arranged to further operate in a first or second additional operating modes, and the steering control device may comprise a control device arranged to switch the control unit from operating in different operating modes. Here, a technical benefit may include that the operator of marine vessel easily may switch between different modes of operation during docking.

Optionally in some examples, including in at least one preferred example, in a first additional operating mode, the control unit is arranged to receive the control signals from the steering control device and control the propulsion or drive system of the marine vessel based on the received control signals. Here, a technical benefit may include that the operator of marine vessel easily may switch to a normal docking procedure in which he has direct control over the propulsion or drive system of the marine vessel through the steering control device.

Optionally in some examples, including in at least one preferred example, in a second additional operating mode, the control unit is arranged to control the propulsion or drive system of the marine vessel based on a difference between a desired set position and bearing, and their respective rate of change, of the marine vessel and a real-time current position and bearing, and their respective rate of change, of the marine vessel. Here, a technical benefit may include that the operator of marine vessel easily may switch to a mode in which the marine vessel is automatically controlled to stay in one place, e.g. setting a set point around which the marine vessel will be controlled, without involving a simulated model of the marine vessel.

Optionally in some examples, including in at least one preferred example, the steering control device may comprise a main control device and a secondary control device, wherein the secondary control device is arranged to receive manual control inputs from an operator of the marine vessel. Here, a technical benefit may include that the secondary control device may be more easily and flexibly be implemented on the marine vessel by, for example, being connected to an pre-existing main control device of the marine vessel.

Optionally in some examples, including in at least one preferred example, the secondary control device comprise one or more joysticks. Here, a technical benefit may include that the desired movements in which an operator intends to steer the marine vessel is easily imitated or reflected in the possible joystick movements, e.g. in two- or three dimensions, and thus provide an intuitive and operator-friendly operator interface.

According to a second aspect of examples herein, a method in a system for steering control stabilization of a marine vessel is provided. The system comprises a steering control device, a control unit and a model simulation device. The method comprises providing, by the steering control device, control signals in response to manual control inputs from an operator of the marine vessel to the model simulation device. The method also comprises applying, by the model simulation device, the control signals generated by the steering control device to a simulated model of a marine vessel. The method further comprises providing, by the model simulation device, a resulting position and bearing, and their respective rate of change, of the simulated model of the marine vessel to the control unit. Furthermore, the method comprises controlling, by the control unit, a propulsion system of the marine vessel based on a difference between a real-time current position and bearing, and their respective rate of change, of the marine vessel and the resulting position and bearing, and their respective rate of change, of the simulated model of the marine vessel provided by the model simulation device.

Optionally in some examples, including in at least one preferred example, the method comprises, when no control signals is provided to the model simulation device, simulating, by the model simulation device, the marine vessel assuming the rate of change of the position and bearing for the simulated model of the marine vessel is null.

According to a third aspect of examples herein, a computer program product comprising program code for performing, when executed by processing circuitry of the control unit, the method as described above is disclosed.

According to a fourth aspect of examples herein, a non-transitory computer-readable storage medium comprising instructions, which when executed by the processing circuitry, cause the processing circuitry to perform the method as described above is disclosed.

The above aspects, accompanying claims, and/or examples disclosed herein above and later below may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Features and advantages of the examples will become readily apparent to those skilled in the art by the following detailed description of exemplary examples thereof with reference to the accompanying drawings, wherein:

> **FIG. 1** shows an example marine vessel with a marine drive system.
> **FIG. 2** schematically shows an example of a system for steering control stabilization.
> **FIG. 3A** illustrate an example of a steering control operable in three dimensions.
> **FIG. 3B** illustrate an example of a steering control operable in two dimensions.
> **FIG. 4** shows an illustrative example of the steering control stabilization and an operator user interface.
> **FIG. 5** is a flowchart depicting examples of a method for steering control stabilization of a marine vessel.
> **FIG. 6** is a schematic illustration of an example computer system.

## DETAILED DESCRIPTION

Aspects set forth below represent the necessary information to enable those skilled in the art to practice the disclosure.

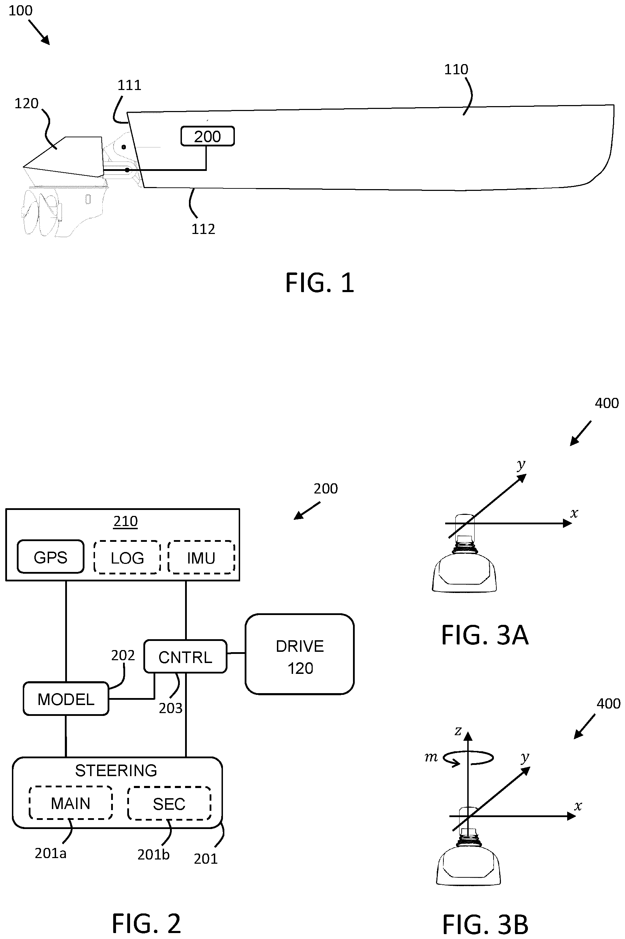

**FIG. 1** illustrate an example **marine vessel 100.** It should be noted that the teachings herein can be applied to various types of marine vessels, including vessels with more than one hull. The marine vessel 100 comprise a **hull 110** that extend in a longitudinal direction. The front of the vessel is referred to as the fore or bow of the marine vessel 100 while the rear of the vessel is referred to as the stern or aft. Some vessels comprise a **transom 111,** which is the aft transverse surface of the hull that forms the stern of a vessel. The hull 110 has a **bottom surface 112,** which may vary widely in shape between vessels.

The marine vessel 100 may comprise a **marine drive system 120, 200.** However, it should be noted that the marine vessel 100 does not have to be provided with a drive system as shown in Fig. 1. The marine vessel 100 may instead, for example, comprise an Integrated Propulsion System, IPS. However, the marine vessel 100 may also be any marine vessel with a straight axle and stern and bow thrusters, or optionally some kind of 360°-rotatable pod thruster. In fact, the propulsion type of the marine vessel 100 is of less importance to the embodiments presented herein, since the propulsion is basically only required to be able to produce thrust in each axis independent of each other.

According to one example, the marine drive system 120, 200 may comprise **a propulsion or drive system 120** and an **on-board control system 200.** Some parts of the propulsion or drive systems 120 of the marine vessel 100 may be mounted to the transom 111 of the hull 110, while other part of the propulsion or drive systems 120 may extend out from the bottom 112 of the hull 110 in different suitable directions. These types of propulsion or drive systems on a marine vessel are known and thus will not be discussed in more detail herein for the marine vessel 100. The on-board control system 200, or system, is connected to the propulsion or drive systems 120 of the marine vessel 100. The on-board control system 200 is also arranged to control the propulsion or drive systems 120 of the marine vessel 100.

**FIG. 2** shows an example of an on-board control system 200 for steering control stabilization, in particular during docking. The on-board control system 200 may comprise a **steering control device 201,** a **model simulation device 202,** and a **control unit 203.** Furthermore, according to some examples herein, the on-board control system 200 may also comprise a **motion sensor system 210.**

The steering control device 201 is arranged to provide control signals to the model simulation device 202. The steering control device 201 is arranged to generate the control signals based on manual control inputs from an operator of the marine vessel 100. This means, for example, that the maneuvers made by an operator of the marine vessel 100 to the steering control device 201 may be transmitted to the model simulation device 202. During normal operation of the marine vessel 100, the steering control device 201 may also arranged to provide the control signals to the control unit 203.

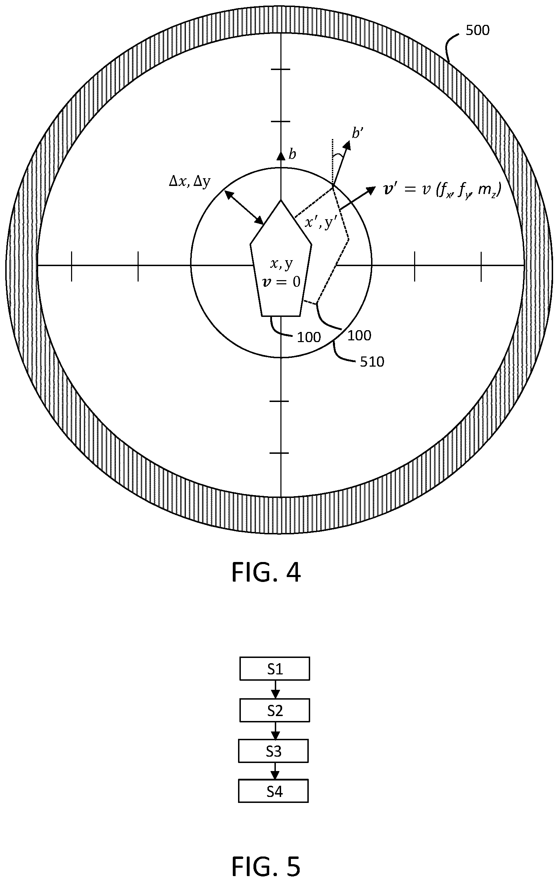

The steering control device 201 may comprise a main control device 201a and a secondary control device 201b; both arranged to receive manual control inputs from an operator of the marine vessel 100. The main control device 201a may, for example, comprise a steering wheel and a throttle lever, while the second control device 201b may comprise one or more joysticks and/or buttons. It should here be noted that the one or more joysticks of the second control device 201b may provide an operator of the marine vessel 100 the possibility of controlling the marine vessel 100 with at least two (2) or three (3) degrees of freedom. This is exemplified and illustrated in **FIG. 3A** and **FIG. 3B,** respectively. It should further be noted that the second control device 201b may also be integrated in a Graphical User Interface, GUI 500 (e.g. as described below with reference to FIG. 4). According to one example, the one or more joysticks and/or button may also be virtual joysticks and/or buttons to be interacted with by the operator of the marine vessel 100 via the GUI 500.

The model simulation device 202 is arranged to receive the control signals from the steering control device 201. The model simulation device 202 is further arranged to apply the received control signals generated by the steering control device 201 to a simulated model of a marine vessel 100. It should here be noted that the marine vessel 100 may be modelled and its movements simulated in numerous different ways. Therefore, it should also be noted that even if only some examples of a simulated model of the marine vessel 100 is given below, this should not be construed as limiting the scope of the invention to these explicit examples.

According to one example, the steering control device 201 may provide control signals to the model simulation device 202 that indicate a movement in an $x$-direction equal to a force in x, $f_x$, a movement in a $y$-direction equal to a force in y, $f_y$, and/or a movement about z-direction (i.e. change in bearing) equal to a moment in z, $m_z$, in case of the steering control device 201 being capable of providing three degrees of freedom, as illustrated in FIG. 3B. However, in case of the steering control device 201 only being capable of providing two degrees of freedom, the movement in z equal to a moment in z, $m_z$, may e.g. be excluded as illustrated in FIG. 3A. The model simulation device 202 may then apply these forces $f_x$, $f_y$, $m_z$ to a simulated model of the marine vessel 100. Optionally, it should be noted that the simulated model of the marine vessel 100 does not necessarily have to be simulated model of the actual marine vessel 100, but may also be a simulated model of a similar or representative marine vessel. The simulated model of the marine vessel 100 by the model simulation device 202 may correspondingly also be configured with two or three degrees of freedom depending on the capability of the steering control device 201.

A simple example of a simulated model of the marine vessel 100 by the model simulation device 202 may be a mass damper model as described by Eq. 1-3 shown below:

$$\ddot{x} = \frac{f_x}{m} - \frac{d_x \dot{x}^2}{m} sign(\dot{x}) \qquad (Eq.\ 1\ )$$

$$\ddot{y} = \frac{f_y}{m} - \frac{d_y \dot{y}^2}{m} sign(\dot{y}) \qquad (Eq.2)$$

$$\ddot{z} = \frac{m_z}{I} - \frac{d_z \dot{z}^2}{I} sign(\dot{z}) \qquad (Eq.\ 3)$$

In the simulated model of the marine vessel 100 as described by Eq. 1-3 above:

> $\ddot{x}$ and $\ddot{y}$ denotes the linear acceleration of the simulated model of the marine vessel 100 in the x- and $y$-directions,
> z and y denotes the velocity of the simulated model of the marine vessel 100 in the x- and $y$-directions,
> m denotes the mass of the simulated model of the marine vessel 100,
> $d_x$ and $d_y$ are summed-up constants of the drag equation,
> $sign$ is a function which returns the sign of the input,
> $\ddot{z}$ denotes the angular acceleration about the z-direction, i.e. bearing or heading,
> $\dot{z}$ denotes the angular velocity about the z-direction, i.e. bearing or heading,
> $I$ denotes the inertia of the simulated model of the marine vessel 100, and
> $d_z$ denoted constants in the drag equation for rotational movements.

Here, it should be noted that the constants $d_x$, $d_y$, and $d_z$ may apply under the assumption that changes in the velocities $\dot{x}$, $\dot{y}$, and $\dot{z}$ are below certain thresholds, i.e. the velocities are relatively small. This is normally the case during docking. Furthermore, it should also be noted that an even simpler linear model may be used for the simulated model of the marine vessel 100 by the model simulation device 202 in case it may be assumed that the velocities $\dot{x}$, $\dot{y}$, and $\dot{z}$ are close to or equal to zero. In this case, the sign function and the square of the velocities (rotational rates) in the mass damper model as described by Eq. 1-3 may simply be removed.

By using the equations Eq. 1-3 for the simulated model of the marine vessel 100, the model simulation device 202 may thus determine a next position, velocities and bearing that the control unit 203 may get as an input. This may, for example, be performed by the model simulation device 202 by solving the equations Eq. 1-3 for a time-step $dt$. Here, the time-step $dt$ may preferably be similar to the frequency of a control loop applied by the control unit 201 for controlling the propulsion or drive systems 120 of the marine vessel 100. Hence, the model simulation device 202 may be arranged to solving the equations Eq. 1-3 each time the control algorithm in the control unit 201 is executed and run. Thus, the model simulation device 202 is arranged to provide a resulting position and bearing, and their respective rate of change, of the simulated model of the marine vessel 100 to the control unit 203. In other words, the model simulation device 202 may be arranged to apply the received control signals from the steering control device 201 to the simulated model of the marine vessel 100 in order to determine the position and bearing, and their respective rate of change, of the simulated model of the marine vessel 100 resulting from applying the control signals from the steering control device 201 to the simulated model of the marine vessel 100. Then, the model simulation device 202 may be arranged to output the resulting position and bearing, and their respective rate of change, of the simulated model of the marine vessel 100 to the control unit 203. Hence, the simulated marine vessel's position, velocities and bearing may be used as the input to the control unit 203 in order to be used by the control unit 203 to regulate and steer the position of the actual marine vessel 100. Here, it should be noted that the term "rate of change" of the position and bearing may refer to the velocities, speeds, and acceleration (i.e. the rate of change of the rate of change of the position and bearing) of the simulated model of the marine vessel 100 or the actual marine vessel 100.

According to one example, the velocities $\dot{x}$, $\dot{y}$, and $\dot{z}$ used by the simulated model of the marine vessel 100 may be the simulated velocity or the actual velocity of the marine vessel 100. In other words, the model simulation device 202 may be arranged to use the real-time current position and bearing, and their respective rate of change, of the marine vessel 130 as input when applying subsequent control signals to the simulated model of the marine vessel 100. This means that that the simulated model of the marine vessel 100 will be continuously fed with and able to consider the real-time current position and bearing, and their respective rate of change, of the marine vessel 100. This ensures that the actual position and bearing, and their respective rate of change, of the marine vessel 100 is synchronized with the position and bearing, and their respective rate of change, of the simulated model of the marine vessel 100. The real-time current position and bearing, and their respective rate of change, of the marine vessel 130 may be provided to the model simulation device 202, for example, by the motion sensor system 210 described in more detail below. As an alternative, according to some examples, the model simulation device 202 may be arranged to use the resulting position and bearing, and their respective rate of change, of the simulated model of the marine vessel 100 as input when applying subsequent control signals to the simulated model of the marine vessel 100. This means that the resulting position and bearing, and their respective rate of change, of the simulated model of the marine vessel 100 may be correlated with the actual position and bearing, and their respective rate of change, of the marine vessel 100, and thus be used to confirm model accuracy. In both these cases, it may also be advantageous by the model simulation device 202 to couple the simulated model of the marine vessel 100 to the real-time current position and bearing of the marine vessel 100 such that the simulated model of the marine vessel 100 is not allowed to drift to far apart from the real-time current position and bearing of the marine vessel 100. For example, a re-start of the simulated model of the marine vessel 100 based on the real-time current position and bearing of the marine vessel 100 may be triggered in case the difference between the position and bearing of the simulated model of the marine vessel 100 and the real-time current position and bearing of the marine vessel 100 are above a predetermined threshold values. Optionally, the position and bearing of the simulated model of the marine vessel 100 may be limited to not differ more than a particular range from the real-time current position and bearing of the marine vessel 100. If they differ more, the position and bearing of the simulated model of the marine vessel 100 may be changed to the maximum or minimum value of the particular range.

Additionally, according to some examples, when no control signals are received from the steering control device 201, e.g. no movement of the joystick by the operator of the marine vessel 100, the model simulation device 202 may run the simulated model of the marine vessel 100 in a so-called open loop, wherein the velocities $\dot{x}$, $\dot{y}$, and $\dot{z}$ are close to or equal to 0. In other words, in case no control signals is provided to the model simulation device 202, the model simulation device 202 is arranged to simulate the model of a marine vessel 100 assuming the rate of change of the position and bearing for the simulated model of the marine vessel 100 is null. Here, it should be noted that the idea is, if there is no joystick input and the rate of change in position (i.e. the speed of the marine vessel 100) is rather low, the model simulation will simulate how the marine vessel 100 "should" come to a stop and then keep that position. While there may initially be some rates of change, they should die out rather quick in this case. Then, the simulated marine vessel will be simulating a stand-still of the simulated marine vessel, whereby, at that point, the model simulation may e.g. stop running the model simulation of the marine vessel until some one moves the joystick (since the position and rates will be the same all the time).

According to some examples, the model simulation device 202 may be arranged to simulate ideal operating conditions for the simulated model of the marine vessel 100 when applying the control signals to the simulated model of the marine vessel 100. Here, the simulated ideal operating conditions for the marine vessel 100 comprise that the marine vessel 100 may be simulated as not subjected to any wind, waves or sea drift. This means that external factors affecting movement of the actual marine vessel 100 in real life may be disregarded by the simulated model of the marine vessel 100, and by simulating the marine vessel 100 similar to when the marine vessel 100 is being driven in perfect conditions, the actual marine vessel 100 may be made to act like there is no disturbance by the control unit 203.

Additionally, in some examples, the simulated model of the marine vessel 100 of the model simulation device 202 may use parameters that simulates that the marine vessel 100 is moving in a fluid with higher viscosity than water. This means that the simulated marine vessel 110 would move slower in response to the control signals from the steering control device 201. This may provide for a more controlled feeling of the movements of the marine vessel 100 to the operator of the marine vessel 110 while using the steering control device 201. It may also cause the marine vessel 100 to break when coming to a halt instead of gliding. Optionally, the simulated model of the marine vessel 100 of the model simulation device 202 may also involve parameters that reflect real-world characteristics of the actual marine vessel 100, such as, the real weight of the marine vessel 100 or a friction parameter accurately corresponding to the real friction of the marine vessel 100 in water.

The control unit 203 is arranged to receive the resulting position and bearing, and their respective rate of change, of the simulated model of the marine vessel 100 from the model simulation device 202. Also, the control unit 203 is arranged to receive the real-time current position and bearing, and their respective rate of change, of the marine vessel 100, e.g. from the motion sensor system 210 described in more detail below. Hence, the control unit 203 may be arranged to control the propulsion or drive system 120 of the marine vessel 100 based on a difference between a real-time current position and bearing, and their respective rate of change, of the marine vessel 100 and the resulting position and bearing, and their respective rate of change, of the simulated model of the marine vessel 100 provided by the model simulation device 202. Accordingly, the control unit 203 may operate in a regular operating mode wherein it uses the difference between the simulated position and velocity parameters from the simulated model of the marine vessel 100 and the real-time position and velocity parameters of the actual marine vessel 100 as a basis when applying its control signals to the propulsion or drive system 120 of the marine vessel 100. In other words, the control unit 203 may control the propulsion or drive system 120 of the marine vessel 100 proportionally to the difference between the simulated position and velocity parameters from the simulated model of the marine vessel 100 and the real-time position and velocity parameters of the actual marine vessel 100.

Advantageously, this means that the undesired "tug-of-war" between the control unit 203 and the operator of the marine vessel 100 as described above in the background may be avoided when docking the marine vessel 100. Also, the undesired oscillations of compensating movements also described in background above is less likely to occur when docking the marine vessel 100, since the marine vessel 100 will accelerate less instantaneously and try to keep a quite constant velocity, or RPM, the whole way though the docking procedure due to that it only compensates for the difference in position and velocity between the simulated model of the marine vessel 100 and the actual marine vessel 100.

According to some examples, the control unit 203 may be arranged to further operate in a first or second additional operating modes. In this case, the steering control device 201 comprise a control device, e.g. a switch or button, arranged to switch the control unit 203 from operating in different operating modes, e.g. switch the control unit 203 from operating in the regular operating mode to instead operate in the first or second additional operating modes.

In the first additional operating mode, the control unit 203 may be arranged to receive the control signals from the steering control device 201 and control the propulsion or drive systems 120 of the marine vessel 100 directly based on the received control signals from the steering control device 201. This may correspond to a normal operation or driving mode of the marine vessel 100.

In the second additional operating mode, the control unit 203 may be arranged to receive a desired set position and bearing, and their respective rate of change, of the marine vessel 100, and control the propulsion or drive system 120 of the marine vessel 100 based on a difference between a desired set position and bearing, and their respective rate of change, of the marine vessel 100 and a real-time current position and bearing, and their respective rate of change, of the marine vessel 100. This may correspond to a conventional stay-in-place mode of the marine vessel 100, wherein the control unit 203 simply tries to maintain the current position and bearing of the marine vessel 100. This may, for example, be illustrated in FIG. 4 by having the desired position of the marine vessel 100 set to the first position $x, y$ with a bearing b and a velocity $v$ = 0. In this case, the marine vessel 100 may be considered to be located at the first position $x, y$ in case a second position of the marine vessel 100 does not exceed $x + \Delta x, y + \Delta y$, e.g. the marine vessel 100 is kept within the **area 510** indicated on the user interface 500.

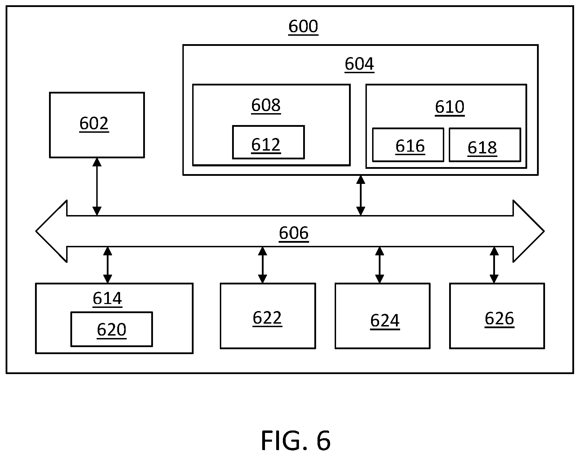

It should be noted that the control unit 203 may be a centralized control unit where processing takes place on processing circuitry located in the same place on the vessel, or a distributed control unit which comprises several spatially separated units of processing circuitry, forming a computer system. An example computer system 600 will be discussed in more detail below with reference to FIG. 6.

The motion sensor system 210 may comprise one or more sensors, possibly of different type. The purpose of the motion sensor system 210 is to sense motion of the marine vessel 100 relative to some reference coordinate system. The motion sensor system may comprise, e.g., one or more inertial measurement units (IMU), one or more speed logs, one or more global positioning system (GPS) receivers, one or more radar transceivers, etc. The motion sensor system 210 may be arranged to measure and determine, in real-time, the marine vessel's 100 current position and bearing, and their respective rate of change. The motion sensor system 210 may be arranged to provide this information to the control unit 201 and the model simulation device 202. For example, it may be advantageous for the motion sensor system 210 to provide the model simulation device 202 with the marine vessel's 100 current position and bearing, and their respective rate of change, upon starting up the steering control stabilization, e.g. switching to the regular operating mode during docking. This in order to achieve a smooth transition from the normal operation of the marine vessel 100 or any of the first or second additional operating modes.

**FIG. 4** illustrates an example of the simulated model of the marine vessel 100 in a first position $x, y$ with a bearing $b$ and a velocity $v = 0$. Here, a control signal $f_x, f_y, m_z$ from steering control device 201 is then applied to the simulated model of the marine vessel 100 which results in the simulated model of the marine vessel 100 being moved to a second position $x', y'$ having a velocity $v = v (f_x, f_y, m_z)$. The applied control signal $f_x, f_y, m_z$ from the steering control device 201 may also result in a change in bearing from $b$ to $b'$. This may be illustrated to an operator of the marine vessel 200, for example, through a **graphical user interface (GUI) 500** as depicted in FIG. 4. Here, for example, the GUI 500 may comprise a touch-screen wherein the manual input from the operator of the marine vessel 100 is received by the operator pressing a finger or clicking on the on-screen representation of the simulated model of the marine vessel 100 and dragging the on-screen representation of the simulated model of the marine vessel 100 to a desired location. Alternatively, this may also be made by clicking on buttons, slide bars or virtual joysticks that may be implemented and presented as virtual elements in the GUI 500. In these cases, the GUI 500 may thus comprise the second control device 201b of the steering control device 201. Optionally, the GUI 500 may also be capable of visualizing an on-screen representation of the marine vessel 100 corresponding to the real position and movements of the marine vessel 100. This may provide a visual understanding to the operator of the marine vessel 100 of the correlation between the simulated model of the marine vessel 100 and the real position and movements of the marine vessel 100.

Examples of a method in a system 200 for steering control stabilization of a marine vessel 100, will now be described with reference to the flowchart depicted in **FIG. 5**. The system 200 comprising a steering control device 201, a control unit 203 and a model simulation device 202. FIG. 5 is an illustrated example of actions or operations which may be taken in the system 200, as described above, on-board the marine vessel 100. It should also be noted that some or all of the functionality described herein as being performed by the control unit 203 and/or the model simulation unit 203 may be provided by the computer system 600 and the processing circuitry 602 executing instructions stored on a computer-readable medium, such as, e.g., the memory 604 shown in Fig. 6. The method may comprise the following actions.

**Action 51.** The steering control device 201 may provide control signals in response to manual control inputs from an operator of the marine vessel 100 to the model simulation device 202. This means, for example, that the steering control device 201, normally used to provide the control signals to the control unit 203, may provide its control signals to the model simulation device 202.

**Action S2.** After receiving the control signals from the steering control device 201 in Action S1, the model simulation device 202 applies the control signals generated by the steering control device 201 to a simulated model of a marine vessel 100. This means, for example, that the received control signals from the steering control device 201 will be used to virtually steer the simulated model of the marine vessel 100, and to calculate and determine a new position, velocities and bearing for the simulated model of the marine vessel 100 resulting from the received control signals. According to some examples, when no control signals is provided to the model simulation device 202, the model simulation device 202 may simulate the marine vessel 100 assuming the rate of change of the position and bearing for the simulated model of the marine vessel 100 is null. This means, for example, that the simulated model of the marine vessel 100 may be executed to run in a open control loop when the velocity of the marine vessel 100 is close to zero.

**Action S3.** After applying the control signals to the simulated model of a marine vessel 100 in Action S2, the model simulation device 202 provides a resulting position and bearing, and their respective rate of change, of the simulated model of the marine vessel 100 to the control unit 203.

**Action S4.** After receiving the resulting position and bearing, and their respective rate of change, of the simulated model of the marine vessel 100 in Action S3, the control unit 110 controls a propulsion or drive system 120 of the marine vessel 100 based on a difference between a real-time current position and bearing, and their respective rate of change, of the marine vessel 100 and the resulting position and bearing, and their respective rate of change, of the simulated model of the marine vessel 100 provided by the model simulation device 202. This means, for example, that the propulsion or drive system 120 of the marine vessel 100 may be controlled proportionally to the difference between a real-time current position and bearing, and their respective rate of change, of the marine vessel 100 and the resulting position and bearing, and their respective rate of change, of the simulated model of the marine vessel 100 provided by the model simulation device 202.

**FIG. 6** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures, and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 420 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 420 can comprise software instructions for implementing the functionality of the examples described herein when executed by the processing circuitry 602. In some examples, the storage device 614 may be a computer program product (e.g., readable storage medium) storing the computer program 420 thereon, where at least a portion of a computer program 420 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 422 configured to receive input and selections to be communicated to the computer system 600 when executing instructions, such as from a keyboard, mouse, touch-sensitive surface, etc. Such input devices may be connected to the processing circuitry 602 through the input device interface 422 coupled to the system bus 606 but can be connected through other interfaces, such as a parallel port, an Institute of Electrical and Electronic Powertrainers (IEEE) 1394 serial port, a Universal Serial Bus (USB) port, an IR interface, and the like. The computer system 600 may include an output device interface 424 configured to forward output, such as to a display, a video display unit (e.g., a liquid crystal display (LCD) or a cathode ray tube (CRT)). The computer system 600 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (200) for steering control stabilization of a marine vessel (100), the system (200) comprising a steering control device (201), a model simulation device (202) and a control unit (203),

   where the steering control device (201) is arranged to provide control signals in response to manual control inputs from an operator of the marine vessel (100) to the model simulation device (202),

   where the model simulation device (202) is arranged to apply the control signals generated by the steering control device (201) to a simulated model of a marine vessel (100) and provide a resulting position and bearing, and their respective rate of change, of the simulated model of the marine vessel (100) to the control unit (203),

   where the control unit (203) is arranged to control a propulsion or drive system (120) of the marine vessel (100) based on a difference between a real-time current position and bearing, and their respective rate of change, of the marine vessel (100) and the resulting position and bearing, and their respective rate of change, of the simulated model of the marine vessel (100)

provided by the model simulation device (202).

2. The system (200) according to claim 1, wherein the model simulation device (202) is arranged to use the real-time current position and bearing, and their respective rate of change, of the marine vessel (100) as input when applying subsequent control signals to the simulated model of the marine vessel (100).

3. The system (200) according to claim 1 or 2, wherein the model simulation device (202) is arranged to use the resulting position and bearing, and their respective rate of change, of the simulated model of the marine vessel (100) as input when applying subsequent control signals to the simulated model of the marine vessel (100).

4. The system (200) according to any of claims 1-3, wherein the model simulation device (202) is arranged to simulate ideal operating conditions for the simulated model of the marine vessel (100) when applying the control signals to the simulated model of the marine vessel (100).

5. The system (200) according to claim 4, wherein the simulated ideal operating conditions for the marine vessel (100) comprise that the marine vessel (100) is simulated as not subjected to any wind, waves or sea drift.

6. The system (200) according to any of claims 1-5, where, in case no control signals in response to manual control inputs from an operator of the marine vessel (100) to the model simulation device (202) is provided, the model simulation device (202) is arranged to simulate the model of a marine vessel (100) assuming the rate of change of the position and bearing for the simulated model of the marine vessel (100) is null.

7. The system (200) according to any of claims 1-6, wherein the control unit (203) is arranged to further operate in a first or second additional operating modes, and the steering control device (201) comprise a control device arranged to switch the control unit (203) from operating in different operating modes.

8. The system (200) according to claim 7, where, in a first additional operating mode, the control unit (203) is arranged to receive the control signals from the steering control device (201) and control the propulsion or drive system (120) of the marine vessel (100) based on the received control signals.

9. The system (200) according to claim 7 or 8, where, in a second additional operating mode, the control unit (203) is arranged to control the propulsion or drive system (120) of the marine vessel (100) based on a difference between a desired set position and bearing, and their respective rate of change, of the marine vessel (100) and a real-time current position and bearing, and their respective rate of change, of the marine vessel (100).

10. The system (200) according to any of claims 1-9, wherein the steering control device (201) comprise a main control device (131a) and a secondary control device (131b), wherein the secondary control device (131b) is arranged to receive manual control inputs from an operator of the marine vessel (100).

11. The system (200) according to claim 10, wherein the secondary control device (131b) comprise one or more joysticks (600).

12. A method in a system (200) for steering control stabilization of a marine vessel (100), the system (200) comprising a steering control device (201), a control unit (203) and a model simulation device (202), the method comprising:

providing (S1), by the steering control device (201), control signals in response to manual control inputs from an operator of the marine vessel (100) to the model simulation device (202);
applying (S2), by the model simulation device (202), the control signals generated by the steering control device (201) to a simulated model of a marine vessel (100);
providing (S3), by the model simulation device (202), a resulting position and bearing, and their respective rate of change, of the simulated model of the marine vessel (100) to the control unit (203); and
controlling (S4), by the control unit (203), a propulsion or drive system (120) of the marine vessel (100) based on a difference between a real-time current position and bearing, and their respective rate of change, of the marine vessel (100) and the resulting position and bearing, and their respective rate of change, of the simulated model of the marine vessel (100) provided by the model simulation device (202).

13. A method according to claim 12, further comprising, when no control signals is provided to the model simulation device (202), simulating, by the model simulation device (202), the marine vessel (100) assuming the rate of change of the position and bearing for the simulated model of the marine vessel (100) is null.

14. A computer program product comprising program code for performing, when executed by processing circuitry of the system (200), the method of any of claims 12-13.

15. A non-transitory computer-readable storage medium comprising instructions, which when executed by the processing circuitry, cause the processing circuitry to perform the method of any of claims 12-13.

16. A marine vessel (100) comprising a system (200) according to any of claims 1-11.

100

120  111  200  110

112

**FIG. 1**

200

400

210

| GPS | LOG | IMU |

DRIVE
120

202  CNTRL

MODEL  203

STEERING

MAIN  SEC

201a  201b  201

*y*

*x*

**FIG. 3A**

400

*z*

*m*  *y*

*x*

**FIG. 2**

**FIG. 3B**

FIG. 4

FIG. 5

FIG. 6

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/140052 A1 (DERGINER MATTHEW ERIC [US] ET AL) 7 May 2020 (2020-05-07) * paragraphs [0032], [0033], [0048] - paragraph [0059]; claims 1-2,6-7,11-12,16-19; figures 2-3,7,9 * * paragraph [0061] * ----- | 1-16 | INV. G05D1/606 G05D1/661 G05D1/43 G05D109/30 G05D107/80 G05D101/10 G05D105/22 B63H25/00 |

TECHNICAL FIELDS SEARCHED (IPC)

G05D

The present search report has been drawn up for all claims

| Place of search | Date of completion of the search | Examiner |
|---|---|---|
| Munich | 29 November 2024 | Mallet, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 7423

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | Publication date | Patent family member(s) | | Publication date |
|---|---|---|---|---|
| US 2020140052 A1 | 07-05-2020 | EP | 3653489 A1 | 20-05-2020 |
| | | JP | 6763073 B2 | 30-09-2020 |
| | | JP | 7110290 B2 | 01-08-2022 |
| | | JP | 2020070015 A | 07-05-2020 |
| | | JP | 2021006451 A | 21-01-2021 |
| | | US | 2020140052 A1 | 07-05-2020 |
| | | US | 2021139126 A1 | 13-05-2021 |

EPO FORM P0459

For more details about this annex : see Official Journal of the European Patent Office, No. 12/82